# EUROPEAN PATENT SPECIFICATION

(11) **EP 0 350 040 B1**
(45) Date of publication and mention of the grant of the patent: **07.09.1994**
(21) Application number: 89112382.0
(22) Date of filing: 06.07.1989
(51) Int. Cl.: C08J 3/03, C08G 18/08, C08G 18/65, C08F 299/06, C09D 175/14, C08G 18/67

(54) **Aqueous dispersions of urethane-acrylic polymers and use thereof in paints**
Wässrige Dispersionen von Urethanacrylatpolymeren und ihre Verwendung in Farben
Dispersions aqueuses de polymères du type uréthane-acrylate et leur utilisation comme revêtements

(30) Priority: 07.07.1988 IT 2126788
(43) Date of publication of application: 10.01.1990
(73) Proprietor: MINISTERO DELL' UNIVERSITA' E DELLA RICERCA SCIENTIFICA E TECNOLOGICA, 00196 Roma (IT)
(72) Inventor: Cozzi, Ennio, I-20020 Cantalupo Milan (IT); Conti, Natale, I-21030 Rasa Varese (IT)
(74) Representative: Weinhold, Peter, Dr.

(56) References cited:
- EP-A- 0 167 188
- EP-A- 0 183 119
- EP-A- 0 189 945
- DIE ANGEWANDTE MAKROMOLEKULARE CHEMIE vol. 156, January 1988, pages151-162, Basel, CH; S.H.O. EGBOH: "Free Radical Grafting of Some Hydrophilic
- Monomers onto Unsaturated Segmented Polyurethans - A Kinetic Study"

## Description

The present invention relates to aqueous dispersions of urethane-acrylic polymers.

More particularly, the present invention relates to aqueous dispersions of urethane-acrylic polymers and to their application in the field of paints.

Ecological and legal requirements have led to an increasing need to replace solvent-soluble products used so far in coating compositions by water soluble products.

Stable aqueous dispersions of polyurethanes to be used as water-proof coating compositions are known since many years. Said dispersions are based on the principle of introducing ionizable groups into the polyurethane molecule, as described, for instance, in US-A-3,479,310 or in EP-A-220,000.

It is also known to produce aqueous dispersions of urethane-acrylic polymers which afford coatings that show the advantageous properties of polyurethanes (mechanical, blocking and chemical resistance) as well as those of polyacrylates (low cost, resistance to weather and light, high solids content).

In particular, US-A-4,318,833 describes the preparation of a water-dispersed polyurethane and its subsequent polymerisation "in situ" with ethylenically unsaturated monomers, such as alkyl esters of acrylic and/or methacrylic acid.

A drawback of this method is that homogeneous mixtures cannot be obtained thereby and therefore it does not allow to achieve the optimum properties of the urethane-acrylic polymers.

The methods described in EP-A-98 752, 167 188 and 183 119 overcome the above drawback in that the polyurethane, in the presence of which the polymerization of the ethylenically unsaturated monomers is carried out, already contains end groups of this type and therefore the end product is more homogeneous.

Similarly, a higher homogeneity of the urethane-acrylic polymer, due to the presence of an ethylenically unsaturated monomer already during the formation of an isocyanic prepolymer, is reported in US-A-4,644,030.

According to the teachings of the above documents, the homogeneous distribution of the macromolecules should make it possible to obtain coatings showing the advantageous properties of both polyurethanes and acrylic polymers. However, the coatings obtainable according to the prior art do not possess a high resistance to alkali and organic solvents.

It has now surprisingly been found that aqueous dispersions of urethane polymers, which result in water-proof coatings having good mechanical properties and showing high adhesion to different substrates and, in particular, high resistance to alkali and organic solvents, may be obtained by starting from at least one organic polyisocyanate and a mixture essentially consisting of macroglycols and of polyols containing ionizable groups and at least one ethylenic unsaturation.

Therefore, the present invention provides aqueous dispersions of urethane polymers containing in the macromolecule hydrophilic ionic groups which are obtainable by the following steps:
a) preparation of an unsaturated oligourethane containing ionizable groups, by reacting at least one organic polyisocyanate with a mixture essentially comprising at least one macroglycol having a molecular weight of from 60 to 6000 and being selected from (hydroxy group-containing) saturated polyesters, polyethers, polyester-urethanes, polyether-urethanes and polyurethane-amides, and at least one polyol containing in the same molecule at least one ionizable group and at least one ethylenic unsaturation and being selected from the products of the reaction of at least one unsaturated dicarboxylic acid, or the corresponding anhydride, with at least one polyhydric alcohol having a molecular weight lower than 600 and containing at least three hydroxy groups;
b) salification of the oligourethane thus obtained;
c) dispersion of the salified oligourethane in water, optionally in the presence of organic polyamines; and
d) polymerization of the dispersed oligourethane with acrylic and/or vinylic and/or allylic monomers.

According to a preferred embodiment of the present invention the oligourethane produced in step (a) is obtained from at least one polyisocyanate and a mixture of one or more macroglycols and one or more polyols in amounts such that the molar ratio of isocyanate groups to the total sum of hydroxy groups ranges from 1.3:1 to 2:1, preferably from 1.4:1 to 1.7:1.

The preparation of the unsaturated oligourethane can be carried out in the presence or in the absence of organic solvents.

If the reaction is carried out in the presence of solvents, these are preferably selected from cellosolve acetate, acetone. tetrahydrofuran and methylethylketone.

The reaction temperatures generally are below about 100°C and preferably range from 60 to 90°C.

Furthermore, the reaction can be conducted in the presence of catalysts known from the prior art, such as organometallic compounds and tertiary amines; examples of these catalysts are: dibutyltin dilaurate, tin octoate, cobalt naphthenate, vanadium acetylacetonate, dimethyltin diethylhexanoate and mixtures thereof, triethylenediamine, tetramethylguanidine and dimethylcyclohexylamine.

Preferred catalysts are triethylenediamine and dibutyltin (di)laurate.

These catalysts are used in (catalytic) amounts generally not higher than 0.1% by weight.

Organic polyisocyanates employable in the preparation of the aqueous dispersions of the present invention are low, medium and/or high molecular weight polyisocyanates. Examples of low molecular weight polyisocyanates are those of the general formula:

OCN-R-NCO (I)

wherein R represents an alkylene, cycloalkylene,alkylene-cycloalkylene or arylene radical containing from 1 to 20 carbon atoms.

For example, R can be C₁-C₂₀-alkylene, preferably C₂-C₁₀-alkylene (e.g. ethylene, propylene, butylene, pentylene, hexylene and octylene); C₃-C₁₀-cycloalkylene (e.g.cyclopentylene and cyclohexylene and methyl-substituted derivatives thereof); C₄-C₁₂-alkylene-cycloalkylene (e.g. methylene-cyclohexylene); and C₆-C₁₄-arylene (e.g. phenylene, naphthylene, biphenylene and methyl-substituted derivatives thereof).

Examples of suitable polyisocyanates of formula (I) are: 2,4-toluene diisocyanate, alone or in admixture with the isomeric 2,6-toluene-diisocyanate; 4,4′-diphenylmethane diisocyanate; 4,4′-dicyclohexylmethane-diisocyanate; 1-isocyanato-3-isocyanato-methyl-3,5,5-trimethylcyclohexane (or isophoronediisocyanate); 2,2,4-trimethylhexamethylene-diisocyanate in admixture with the isomeric 2,4,4-trimethylhexamethylene-diisocyanate; ethylidene-diisocyanate, butylene-diisocyanate, hexamethylene-diisocyanate, cyclohexylene-1,4-diisocyanate; cyclohexylene-1,2-diisocyanate, xylylene-diisocyanate; dichlorohexamethylene-diisocyanate; dicyclohexyl-4,4′-diisocyanate; 1-methyl-2,4-diisocyanato-cyclohexane and 1-methyl-2,6-diisocyanatocyclohexane. Among these polyisocyanates, the aliphatic or cycloaliphatic diisocyanates are preferred when high resistance to UV and to hydrolytic degradation are desired.

Examples of medium or high molecular weight polyisocyanates are those having a different degree of condensation, obtainable e.g. by phosgenation of aniline-formaldehyde condensates. These products consist of mixtures of polymethylene polyphenylene isocyanates of the general formula: 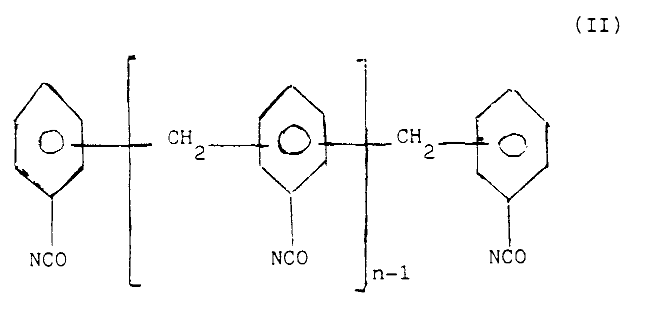
wherein n represents an integer higher than or equal to 1 (preferably of from 1 to 3).

Particularly preferred polyisocyanates are mixtures of polymethylene polyphenylene isocyanates having an average functionality of from 2.6 to 2.8; these products are known under different trade names such as "Tedimon®31" of Montedipe Company "PaPi®" of Upjohn or "Mondur®MR" of Mobay Company.

Among the macroglycols which can be used for preparing the aqueous dispersions of the present invention the essentially linear macroglycols having a molecular weight of from 60 to 6000, preferably of from 200 to 2000, generally aliphatic or cycloaliphatic and selected from (hydroxy group-containing) saturated polyesters, polyethers, polyester -urethanes, polyether-urethanes, polyurethane -amides and mixtures thereof, are preferred.

Examples of suitable polyesters are the polycondensation products of dicarboxylic acids or anhydrides thereof, preferably aliphatic dicarboxylic acids having from 4 to 9 carbon atoms, such as succinic, adipic, sebacic and azelaic acid or anhydrides thereof, with aliphatic diols containing from 2 to 8 carbon atoms, such as, for instance, ethylene glycol, propylene glycol, 1,3-and 1,4-butanediol, 1,6-hexanediol, and mixtures thereof. or the diol-initiated polycondensation products of ε-caprolactone (polycaprolactone diols).

Examples of suitable polyester-urethanes are the polyaddition products of the above mentioned polyesters with organic diisocyanates, the polyesters being employed in molar excess.

Examples of suitable polyethers are the different types of polyethylene glycols, polypropylene glycols and the polymerization products of tetrahydrofuran.

According to an alternative, low molecular weight diols, such as for instance, 2,2-bis-(4-hydroxycyclohexyl)propane, may be used in combination with macroglycols.

The polyols containing in the same molecule at least one ionizable group and at least one ethylenic unsaturation may be selected from the products of the reaction of at least one unsaturated dicarboxylic acid, or the corresponding anhydride, and at least one low molecular weight (for instance having a molecular weight of less than 600), polyhydric alcohol containing at least three hydroxy groups, such as trimethylolpropane, trimethylolethane, glycerine, 1,2,6-hexanetriol, polycaprolactonetriol, ethoxylated or propoxylated pentaerythritol, triethanolamine, triisopropanolamine and trihydroxyethylisocyanurate.

Examples of unsaturated diacids or corresponding anhydrides suitable for the preparation of the polyols employable according to the present invention are fumaric acid, maleic acid, itaconic acid, citraconic acid and the corresponding anhydrides.

As ionizable groups those capable of providing the oligourethane with a negative charge (anion) are the preferred ones, in that in this case end products can be obtained which are compatible with additives, pigments, dyestuffs and aqueous dispersions of different types (for instance acrylic, vinyl, butadiene-acrylonitrile dispersions) which are in the whole body of cases of the anionic type.

The reaction between the acid or the anhydride and the polyvalent low molecular weight alcohol may be carried out in a manner so as to obtain a halfester, by working at temperatures of from 50 to 100°C until a constant acid number is obtained and, optionally, under reduced pressure, generally of from 5 to 10 kPa.

For the preparation of the oligurethane the macroglycol and the polyol employed in step (a) above, are preferably used in molar ratios of the corresponding hydroxy groups of from 1:0.1 to 1:10.

The salification of the oligourethane is preferably carried out in the molten state and can be achieved by simply adding the salifying agent, as such or dissolved in water and/or an organic solvent, at temperatures of from 50 to 80°C. If the molten oligourethane has too high a viscosity at these temperatures, it is advantageous to dilute the oligourethane, before salifying it, with solvents preferably miscible with water and having boiling points lower than that of water (in order to be easily removable by distillation). Examples of suitable solvents are acetone, methylethyl ketone and tetrahydrofuran.

Alternatively, it is possible to work in the presence of an ethylenically unsaturated monomer which is liquid at room temperature and inert in the phase of the preparation of the oligourethane but is reactive in the polymerization of step (d) above.

Finally, it is possible to use inert solvents which are not removable by distillation and therefore remain in the final product wherein they may exert a coalescing effect. Examples of such solvents are N-methylpyrrolidone, glycol ethers, alcoholic esters. The quantity of solvent generally necessary is not higher than one fifth of the weight of the oligourethane.

To salify the oligourethane, salifying agents selected from inorganic bases, such as sodium and ammonium hydroxide, and organic bases, such as tertiary amines and alkanolamines, are preferably used. Specific examples or organic bases are triethylamine, dimethyl-ethanolamine and methyl-diethanolamine.

After the salification, the oligourethane may be diluted with water in any ratio. Therefore, the aqueous dispersion is preferably produced in a manner such as to have a solids content of more than 20% by weight.

By the dispersion in water an elongation of the chain occurs, due to the reaction of free isocyanate groups with water and/or, optionally, with organic polyamines containing at least 2 primary amino groups, such as, e.g., ethylene diamine, diethylene triamine and hydrazine. Generally, these organic polyamines are added in amounts of from 0 to about 10% by weight, based on the oligourethane. The unsaturated oligourethane, dissolved or dispersed in water as described above, can then be copolymerized with ethylenically unsaturated monomers according to known techniques.

Examples of suitable ethylenically unsaturated monomers are: esters of acrylic and methacrylic acid, such as ethyl acrylate, butyl acrylate, 2-ethyl-hexyl acrylate, cyclohexyl-chloroacrylate, isobutyl-chloro-acrylate, methyl-chloro-acrylate, methyl-methacrylate, butyl-methacrylate, stearyl-methacrylate, phenyl-methacrylate, isopropyl-methacrylate, cyclohexyl-methacrylate, 3,3-dimethyl-2-butyl-methacrylate, etc.; acrylonitrile, methacrylonitrile; the corresponding amides, such as acrylamide and methacrylamide, optionally methylolated and/or successively etherified with monohydric C₁-C₄ alcohols; vinyl esters and ethers, such as vinyl acetate, vinyl propionate; vinyl chloride, vinylidene chloride, vinyl-ethyl-ether; aromatic compounds, such as styrene, vinyltoluene, 4-methylstyrene, 4-methoxy-styrene, 3,4-dimethylstyrene, 2,6-dichlorostyrene, 2,4-dichlorostyrene, 2-chlorostyrene, 3-chlorostyrene, 4-chlorostyrene, 4-chloro-2-methyland styrene; allyl compounds, such as allyl alcohol and allyl-acetate; and combinations of two or more thereof.

It is also possible to use monomers containing two or more ethylenically unsaturated groups, such as butanediol diacrylate and dimethacrylate, hexanediol diacrylate and dimethacrylate, trimethylolpropane triacrylate and trimethacrylate and pentaerythritol triacrylate and trimethacrylate.

The ethylenically unsaturated monomers may be polymerized in the presence of the aqueous solution or dispersion of the unsaturated oligourethanes according to the known (emulsion) polymerization techniques and by using the well-known promoters for radical polymerizations, such as potassium and ammonium persulfates, hydrogen peroxide, alkyl hydroperoxides, e.g. tert.-butylhydroperoxide, cumene-hydroperoxide, p-menthane-hydroperoxide, di-cumyl-peroxide, benzoyl-peroxide and azo-bis-isobutyronitrile.

Preferably, these promoters are used in the presence of reducing agents, known in the prior art, in order to reduce the temperature of the radical decomposition. Examples of suitable reducing agents are sodium metabisulfite, sodiumformaldehyde sulfoxylate, formic acid and ascorbic acid.

Examples of promoter/reducing agent combinations preferred in the present invention are: tert.-butyl-hydroperoxide/sodiumformaldehyde sulfoxylate and hydrogen peroxide/ascorbic acid.

The quantities of promoter used generally range from 0.01 to 2%, preferably from 0.1 to 1% by weight, based on the total weight of the monomers.

The monomers can be fed in bulk or with feeding times of from 2 to 6 hours.

The promoter generally is fed within 2-6 h, preferably feeding it gradually and within a feeding time which is at least 10 minutes longer than that of the monomer.

The polymerization temperatures depend on the type of monomers used and the employed catalytic system. They generally range from 50 to 100°C, preferably from 30 to 80°C.

In general, there are obtained stable aqueous dispersions which have a solids content of preferably more than 20% by weight (particularly of from 30 to 50%) and wherein the concentration of oligourethane, in the dispersed polymer, preferably is higher than 10% by weight, generally of from 20 to 70%. These dispersions may be employed for the coating of different substrates, for instance wood, metal, plastic materials and fabric, and can be applied by known techniques, e.g. by brush, spray and dipping.

The stability of the above dispersions depends on the number of ionic sites contained in the macromolecules, which can be expressed as meq/100g of the dry polymer. Preferably, the corresponding value ranges from 10 to 50 meq/100g, particularly from 20 to 40 meq/100g.

Films and coatings obtained from the dispersions of the present invention are characterized by their excellent properties as regards e.g. flexibility, elasticity, hardness, appearance, brightness and, as compared to the products known in the art, by their alkali and organic solvent resistance.

The following examples are given in order to illustrate the present invention.

### EXAMPLE 1

Into a reaction flask provided with stirrer, thermometer, condenser and device for heating and cooling, there were introduced, under nitrogen, (A) 29.4 g of maleic anhydride (0.3 mols) and (B) 40.2 g of trimethylolpropane (0.3 mol). The resulting mixture was heated to 85°C and maintained at this temperature until a constant acid number was reached (theoretical value: 242 mg KOH/g). Then there were added (C) 195 g of polyoxytetramethylenglycol (M.W. 1000; 0.195 mol), (D) 31.2 g of 2,2-bis-(4-hydroxycyclohexyl)propane (0.13 mol) and (E) 150 g of N-methylpyrrolidone. The temperature was adjusted to 40°C and (F) 0.2 g of benzoyl chloride and (G) 208.1 g of isophorone diisocyanate (0.9375 mol) were also added. Thereupon, the reaction mixture was heated to 85°C and maintained at this temperature until the -NCO content was 5%. Thereafter, (H) 26.7 g of dimethylethanolamine (0.3 mol) in (I) 1038 g of deionized water were added and the temperature was raised to 50°C. The whole mixture was allowed to react until no -NCO groups could be detected anymore. Then, (L) 370 g of methylmethacrylate (3.7 mols), (M) 30 g of styrene (0.288 mol) and (N) 50 g of a 25% aqueous solution of surfactant (nonyl phenol ethoxylate (4 mols) ammonium phosphate) were added. The resulting mixture was heated to 60°C and within about 120 minutes (Q) 45 g of a 8% aqueous tert.-butylhydroperoxide solution and (P) 45 g of a 4% aqueous sodium sulfoxylate solution were introduced. At the end of this procedure, the mixture was allowed to react at 60°C for 30 minutes and thereafter it was cooled. Thus, a stable emulsion with a dry substance content of 43% was obtained.

### EXAMPLE 2

Example 1 was repeated, replacing component (B) by 164.5 g of polycaprolactonetriol (M.W. 540; 0.3 mol).

The reaction was carried out until an acid number of 88 mg KOH/g was reached; thereafter components (C),(D),(E),(F) and (G) were added and the polymerization was carried out until the -NCO concentration was 4.2%.

Then the procedure of example 1 was followed.

### EXAMPLE 3

The procedure of example 1 was repeated, replacing component (B) by 164.5 g of trifunctional polyester RUCOFLEX^{R} F-2311 (Rucò Polymer Corporation) (M.W. 540, 0.3 mol). Then the reaction was further carried out as described in example 2.

### EXAMPLE 4

The procedure of example 1 was followed, reducing the quantity of component (I) to 738 g. The remaining 300 g of deionized water were used for the preparation of a pre-emulsion of components (L),(M) and (N) which was added to the reaction mixture simultaneously with components (Q) and (P) within about 120 minutes.

At the end of the feeding period, the resulting mixture was allowed to react at 60°C for 30 minutes and then it was cooled.

### COMPARISON EXAMPLE

Into a reaction flask equipped with stirrer, thermometer, condenser and device for heating and cooling, there were introduced, under nitrogen, 195 g of polyoxytetramethylene glycol (M.W. 1000; 0.195 mol), 31.2 g of 2,2-bis(4-hydroxycyclohexyl)propane (0.13 mol), 49.6 g of 2,2-(hydroxymethyl)propionic acid (0.37 mol) and 110 g of N-methyl pyrrolidone. Thereafter, the temperature was adjusted to 40°C and 0.23 g of benzoyl chloride and 231.4 g of isophorone diisocyanate (1.0425 mol) were added. The resulting reaction mixture was heated to 90°C and maintained at this temperature until a -NCO content of 6% was reached. Thereafter, the reaction mixture was cooled to 70°C, the nitrogen was replaced by air and 405.9 g of methylmethacrylate (4.055 mols) and 27.1 g of hydroxypropylacrylate (0.2085 mol) were added. The whole mass was kept at 60°C until the -NCO content was 2.7%. Thereupon, 32.9 g of dimethylethanolamine (0.37 mol), 64 g of a 25% aqueous solution of surfactant (nonylphenol ethoxylate (4 mols) ammonium phosphate) and 969.7 g of deionized water were added and the resulting mixture was allowed to react at 60°C until the -NCO groups had disappeared. The reaction mixture was cooled to 50°C, air was again replaced by nitrogen and 47 g of a 8% aqueous solution of tert.-butylhydroperoxide and 45 g of a 4% aqueous solution of sodium sulfoxylate were added within 120 minutes. The mixture was allowed to react for a further 30 minutes at 50°C and thereafter it was cooled. Thus, a stable emulsion with a dry substance content of 45% was obtained.

The products obtained in examples 1, 2, 3 and 4 and the comparative example were formulated as clear paints for wood and applied on samples which, after having been dried at 23°C and 50% relative humidity for 7 days, gave the following results:

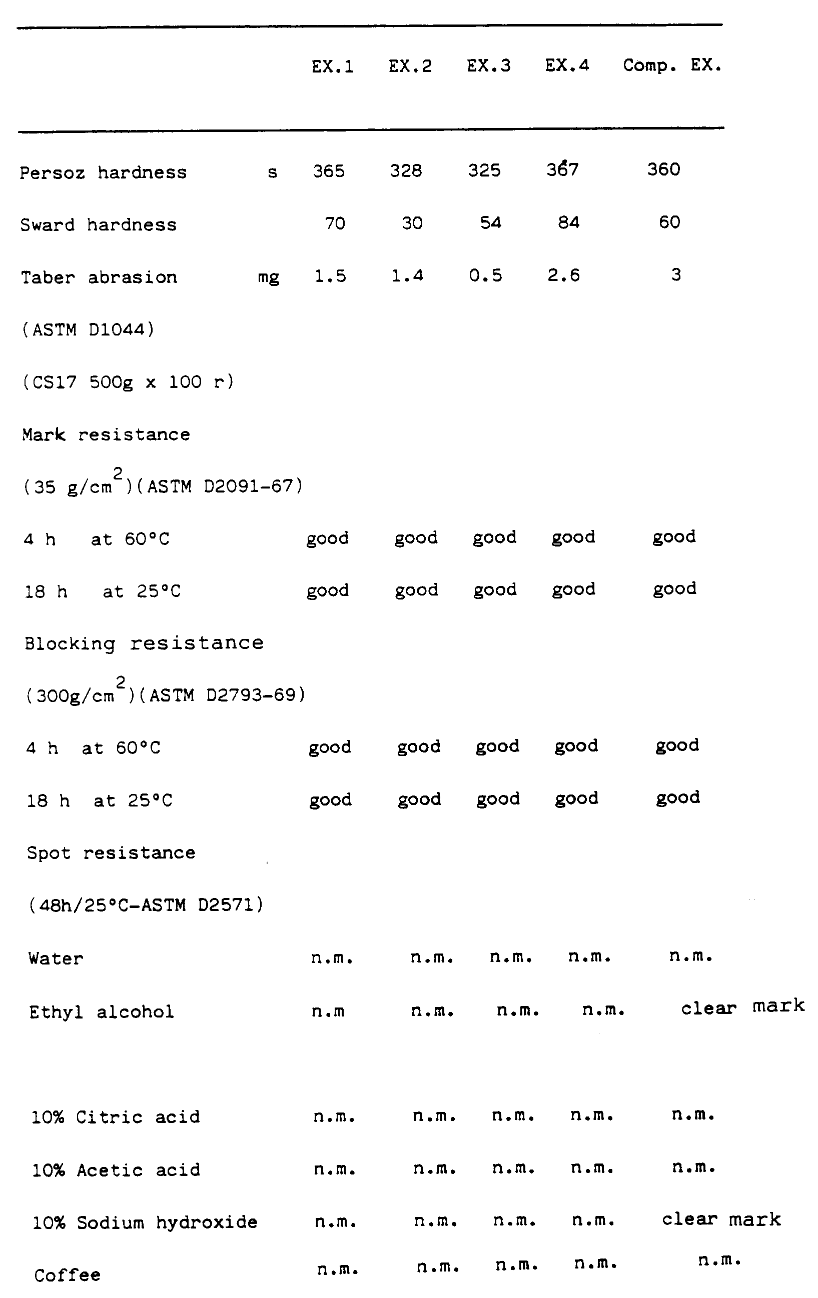

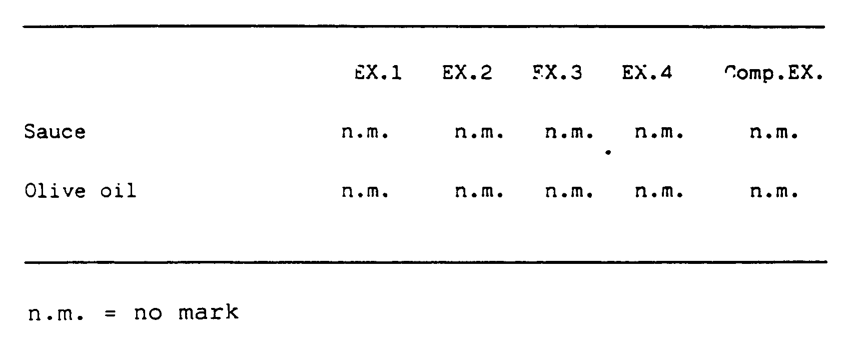

## Claims

1. Aqueous dispersions of urethane polymers, containing in the macromolecule ionic groups, which are obtainable by the following steps:
a) preparation of an unsaturated oligourethane containing ionizable groups, by reacting at least one organic polyisocyanate with a mixture essentially comprising at least one macroglycol having a molecular weight of from 60 to 6000 and being selected from (hydroxy group-containing) saturated polyesters, polyethers, polyester-urethanes, polyether-urethanes and polyurethane-amides, and at least one polyol containing in the same molecule at least one ionizable group and at least one ethylenic unsaturation and being selected from the products of the reaction of at least one unsaturated dicarboxylic acid, or the corresponding anhydride, with at least one polyhydric alcohol having a molecular weight lower than 600 and containing at least three hydroxy groups;
b) salification of the oligourethane thus obtained;
c) dispersion of the salified oligourethane in water, optionally in the presence of organic polyamines; and
d) polymerisation of the dispersed oligourethane with acrylic and/or vinylic and/or allylic monomers.

2. Dispersions according to claim 1, wherein the oligourethane formed in step (a) is obtained from at least one polyisocyanate and a macroglycol/polyol mixture, the molar ratio of isocyanate groups to the total of the hydroxy groups ranging from 1.3 to 2, preferably from 1.4 to 1.7.

3. Dispersions according to any one of claims 1 and 2, wherein the organic polyisocyanates are low, medium and/or high molecular weight polyisocyanates, the low molecular weight polyisocyanates being preferably selected from those of general formula:
OCN-R-NCO (I)
wherein R represents an alkylene, cycloalkylene, alkylene-cycloalkylene or arylene radical containing from 1 to 20 carbon atoms; and the medium or high molecular weight polyisocyanates being preferably selected from those having a different degree of condensation obtainable by phosgenation of aniline-formaldehyde condensates and consisting of mixtures of polymethylene polyphenylene isocyanates of the general formula: 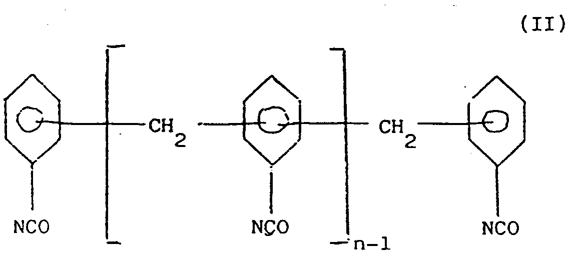 wherein n represents an integer higher than or equal to 1.

4. Dispersions according to any one of the preceding claims, wherein the macroglycols are essentially linear aliphatic or cycloaliphatic macroglycols having a molecular weight of from 200 to 2000.

5. Dispersions according to any one of the preceding claims, wherein the macroglycols are used in combination with low molecular weight diols.

6. Dispersions according to any one of the preceding claims, wherein the unsaturated dicarboxylic acids or the corresponding anhydrides are selected from fumaric acid, maleic acid, itaconic acid or citraconic acid or the corresponding anhydrides, and the low molecular weight polyhydric alcohols are selected from trimethylolpropane, trimethylolethane, glycerine, 1,2,6-hexanetriol, polycaprolactontriol, ethoxylated or propoxylated pentaerythritol, triethanolamine, triisopropanolamine or trihydroxyethyl-isocyanurate.

7. Dispersion according to claim 6, wherein the reaction between the dicarboxylic acid or the corresponding anhydride and the low molecular weight polyhydric alcohol is carried out in a manner such as to obtain a halfester, by working at temperatures of from 50 to 100°C until a constant acid number is reached and, optionally, under reduced pressure, preferably of from 5 to 10 kPa.

8. Dispersions according to any one of the preceding claims, wherein the macroglycol and the polyol are used in the preparation of the oligourethane in a molar ratio of the corresponding hydroxyl groups of from 0.1 to 10.

9. Dispersions according to any one of the preceding claims, wherein the salification of the oligourethane is performed in the molten state or in the presence of preferably water miscible solvents having a boiling point lower than that of water.

10. Dispersions according to any one of the preceding claims, wherein the salification of the oligourethane is carried out by use of salifying agents selected from organic bases, preferably tertiary amines or alkanolamines, or from inorganic bases, preferably sodium or ammonium hydroxide.

11. Dispersions according to any one of the preceding claims, wherein the acrylic and vinylic monomers are selected from esters of acrylic acid; acrylonitrile, methacrylonitrile and the corresponding amides, optionally methylolated and/or etherified with monovalent C₁-C₄ alcohols; and vinyl esters and ethers.

12. Dispersions according to any one of the preceding claims, having a final dry solids content of more than 20% by weight, preferably of from 30 to 50% b.w., the concentration of the oligourethane in the dispersed polymer being higher than 10% b.w., preferably of from 20 to 70% b.w.

13. Dispersions according to any one of the preceding claims, wherein the concentration of ionic centers in the macromolecules ranges from 10 to 50 meq/100 g of dry substance and preferably from 20 to 40 meq/100 g.

14. Use of the dispersions according to any one of the preceding claims for coating, preferably for the coating of wood, metal, plastic materials and fabric.

## Patentansprüche

1. Wäßrige Dispersionen von Urethanpolymeren, die im Makromolekül ionische Gruppen enthalten und welche durch die folgenden Schritte erhältlich sind:
a) Herstellung eines ungesättigten Oligourethans, das ionisierbare Gruppen enthält, durch Umsetzung mindestens eines organischen Polyisocyanats mit einer Mischung, die im wesentlichen umfaßt: mindestens ein Makroglykol mit einem Molekulargewicht von 60 bis 6000 und ausgewählt aus (Hydroxygruppen enthaltenden) gesättigten Polyestern, Polyethern, Polyester-Urethanen, Polyether-Urethanen und Polyurethan-Amiden und mindestens ein Polyol, das im selben Molekül mindestens eine ionisierbare Gruppe und mindestens eine ethylenisch ungesättigte Stelle enthält und ausgewählt ist aus den Produkten der Reaktion mindestens einer ungesättigten Dicarbonsäure oder dem korrespondierenden Anhydrid mit mindestens einem mehrwertigen Alkohol mit einem Molelkulargewicht unter 600 und mindestens drei Hydroxygruppen;
b) Versalzen des so erhaltenen Oligourethans;
c) Dispergieren des versalzten Oligourethans in Wasser, gegebenenfalls in Gegenwart eines organischen Polyamins, und
d) Polymerisieren des dispergierten Oligourethans mit Acryl- und/oder Vinyl- und/oder Allylmonomeren.

2. Dispersionen gemäß Anspruch 1, worin das in Schritt (a) gebildete Oligourethan erhalten wird aus mindestens einem Polyisocyanat und einer Makroglykol/Polyol-Mischung, wobei das Molverhältnis von Isocyanatgruppen zur Gesamtheit der Hydroxygruppen im Bereich von 1.3 bis 2, vorzugsweise 1.4 bis 1.7, liegt.

3. Dispersionen gemäß irgendeinem der Ansprüche 1 und 2, worin die organischen Polyisocyanate Polyisocyanate geringen, mittleren und/oder hohen Molekulargewichts sind, wobei die Polyisocyanate geringen Molekulargewichts vorzugsweise ausgewählt werden aus solchen der allgemeinen Formel:
$\text{OCN-R-NCO (I)}$
worin R einen Alkylen-, Cycloalkylen-, Alkylen-Cycloalkylen- oder Arylenrest mit 1 bis 20 Kohlenstoffatomen bedeutet, und wobei die Polyisocyanate mittleren und hohen Molekulargewichts vorzugsweise ausgewählt sind aus solchen mit unterschiedlichen Kondensationsgraden, die erhältlich sind durch Phosgenisierung von Anilin-Formaldehyd-Kondensaten, und aus Mischungen von Polymethylen-Polyphenylen-Isocyanaten der allgemeinen Formel 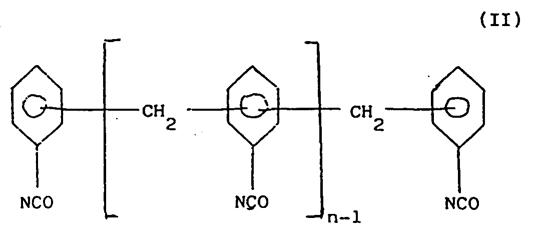 bestehen, in der n eine Zahl größer oder gleich 1 bedeutet.

4. Dispersionen gemäß irgendeinem der vorhergehenden Ansprüche, worin die Makroglykole im wesentlichen lineare aliphatische oder cycloaliphatische Makroglykole mit einem Molekulargewicht zwischen 200 und 2000 sind.

5. Dispersionen gemäß irgendeinem der vorhergehenden Ansprüche, worin die Makroglykole in Kombination mit Diolen niedrigen Molekulargewichts verwendet werden.

6. Dispersionen gemäß irgendeinem der vorhergehenden Ansprüche, worin die ungesättigten Dicarbonsäuren oder die korrespondierenden Anhydride ausgewählt sind aus Fumarsäure, Maleinsäure, Itaconsäure oder Citraconsäure oder den korrespondierenden Anhydriden, und die mehrwertigen Alkohole niedrigen Molekulargewichts ausgewählt sind aus Trimethylolpropan, Trimethylolethan, Glycerin, 1,2,6-Hexantriol, Polycaprolactontriol, ethoxyliertem oder propoxyliertem Pentaerythrit, Triethanolamin, Triisopropanolamin oder Trihydroxyethylisocyanurat.

7. Dispersionen gemäß Anspruch 6, worin die Reaktion zwischen der Dicarbonsäure oder dem korrespondierenden Anhydrid und dem mehrwertigen Alkohol niedrigen Molekulargewichts derart ausgeführt wird, daß ein Halbester erhalten wird, indem man bei Temperaturen von 50 bis 100 °C arbeitet, bis eine konstante Säurezahl erreicht ist, und gegebenenfalls unter vermindertem Druck, vorzugsweise zwischen 5 und 10 kPa.

8. Dispersionen gemäß irgendeinem der vorhergehenden Ansprüche, worin das Makroglykol und das Polyol bei der Herstellung des Oligourethans in einem Molverhältnis der korrespondierenden Hydroxygruppen von 0.1 bis 10 verwendet werden.

9. Dispersionen gemäß irgendeinem der vorhergehenden Ansprüche, worin das Versalzen des Oligourethans im geschmolzenen Zustand oder in Gegenwart vorzugsweise wassermischbarer Lösemittel mit einem Siedepunkt unter dem des Wassers durchgeführt wird.

10. Dispersionen gemäß irgendeinem der vorhergehenden Ansprüche, worin die Versalzung des Oligourethans unter Verwendung von Versalzungsmitteln durchgeführt wird, die ausgewählt sind aus organischen Basen, vorzugsweise tertiären Aminen oder Alkanolaminen, oder anorganischen Basen, vorzugsweise Natrium- oder Ammoniumhydroxyd.

11. Dispersionen gemäß irgendeinem der vorhergehenden Ansprüche, worin die Acryl- und Vinylmonomere ausgewählt sind aus Estern der Acrylsäure; Acrylnitril, Methacrylnitril und den entsprechenden Amiden, gegebenfalls methyloliert und/oder verethert mit einwertigen C₁-C₄-Alkoholen, und Vinylestern und -ethern.

12. Dispersionen gemäß irgendeinem der vorhergehenden Ansprüche mit einem Endgehalt an trockenen Feststoffen von über 20 Gew.-%, vorzugsweise 30 bis 50 Gew.-%, wobei die Konzentration an Oligourethan im dispergierten Polymer über 10 Gew.-%, vorzugsweise zwischen 20 und 70 Gew.-%, liegt.

13. Dispersionen gemäß irgendeinem der vorhergehenden Ansprüche, worin die Konzentration ionischer Zentren in den Makromolekülen im Bereich von 10 bis 50 meq/100 g trockene Substanz und vorzugsweise zwischen 20 und 40 meq/100 g liegt.

14. Verwendung der Dispersionen gemäß irgendeinem der vorhergehenden Ansprüche zur Beschichtung, vorzugsweise zur Beschichtung von Holz, Metall, Kunststoffmaterialien und Stoff.

## Revendications

1. Dispersions aqueuses de polymères d'uréthane dont la macromolécule contient des groupes ioniques, qui peuvent être obtenues par les étapes suivantes :
a) préparation d'un oligouréthane insaturé contenant des groupes ionisables, par réaction d'au moins un polyisocyanate organique avec un mélange comprenant essentiellement au moins un macroglycol ayant un poids moléculaire de 60 à 6000 et qui est sélectionné parmi des polyéthers, des polyester-uréthanes, des polyéther-uréthanes et des polyuréthane-amideset des polyesters saturés contenant le groupe hydroxy, et au moins un polyol contenant dans la même molécule au moins un groupe ionisable et au moins une insaturation éthylénique et étant sélectionné parmi les produits de la réaction d'au moins un acide dicarboxylique insaturé, ou de l'anhydride correspondant, avec au moins un alcool polyhydrique ayant un poids moléculaire inférieur à 600 et contenant au moins trois groupes hydroxy;
b) salification de l'oligouréthane ainsi obtenu;
c) dispersion de l'oligouréthane salifié dans l'eau, éventuellement en présence de polyamines organiques; et
d) polymérisation de l'oligouréthane dispersé avec des monomères acrylique et/ou vinylique et/ou allylique.

2. Dispersions suivant la revendication 1, dans lesquelles l'oligouréthane formé dans l'étape (a) est obtenu à partir d'au moins un polyisocyanate et d'un mélange macroglycol/polyol, le rapport molaire des groupes isocyanate au total des groupes hydroxy étant compris dans la gamme comprise entre 1,3 et 2, de préférence entre 1,4 et 1,7.

3. Dispersions suivant l'une quelconque des revendications 1 et 2, dans lesquelles les polyisocyanates organiques sont des polyisocyanates de poids moléculaire bas, moyen et/ou élevé, les polyisocyanates de bas poids moléculaire étant de préférence choisis parmi ceux qui sont représentés par la formule générale :
OCNRNCO (I)
dans laquelle R représente un groupe alkylène, cycloalkylène, alkylène-cycloalkylène ou arylène contenant de 1 à 20 atomes de carbone; les polyisocyanates de poids moléculaire moyen ou élevé étant de préférence choisis parmi ceux qui ont un degré différent de condensation, pouvant être obtenus, par phosgénation de condensats d'aniline formaldéhyde et consistant en mélange de polyméthylène polyphénylène isocyanates de formule générale : 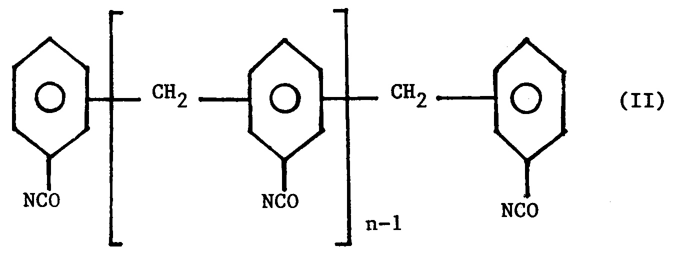 dans laquelle n représente un entier supérieur ou égal à 1.

4. Dispersions suivant l'une quelconque des revendications précédentes, dans lesquelles les macroglycols sont des macroglycols aliphatiques ou cycloaliphatiques essentiellement linéaires ayant un poids moléculaire de 200 à 2.000.

5. Dispersions suivant l'une quelconque des revendications précédentes, dans lesquelles les macroglycols sont utilisés en combinaison avec des diols de bas poids moléculaire.

6. Dispersions suivant l'une quelconque des revendications précédentes, dans lesquelles les acides dicarboxyliques insaturés ou les anhydrides correspondants, sont sélectionnés parmi l'acide fumarique, l'acide maléique, l'acide itaconique, l'acide citraconique et les anhydrides correspondants, et les alcools polyhydriques de bas poids moléculaire sont sélectionnés parmi le triméthylolpropane, le triméthyloléthane, la glycérine, le 1,2,6-hexanetriol, un polycaprolactonetriol, un pentaérythritol éthoxylé ou propoxylé, la triéthanolamine, la triisopropanolamine ou l'isocyanurate de trihydroxyéthyle.

7. Dispersions suivant la revendication 6, dans lesquelles la réaction entre l'acide dicarboxylique ou l'anhydride correspondant et l'alcool polyhydrique à bas point moléculaire, est effectuée de façon à obtenir un semi-ester, par utilisation d'une température comprise entre 50 et 100°C jusqu'à obtention d'un indice d'acide constant, et éventuellement sous pression réduite, de préférence de 5 à 10 kPa.

8. Dispersions suivant l'une quelconque des revendications précédentes, dans lesquelles le macroglycol et le polyol sont utilisés dans la préparation de l'oligouréthane selon un rapport molaire des groupes hydroxy correspondants de 0,1 à 10.

9. Dispersions suivant l'une quelconque des revendications précédentes, dans lesquelles la salification de l'oligouréthane est conduite à l'état fondu ou en présence de solvants de préférence miscibles à l'eau et ayant un point d'ébullition inférieur à celui de l'eau.

10. Dispersions suivant l'une quelconque des revendications précédentes, dans lesquelles la salification de l'oligouréthane est conduite avec des agents salifiants choisis parmi des bases organiques comme des amines tertiaires et des alcanolamines, ou parmi des bases inorganiques, comme l'hydroxyde de sodium ou l'hydroxyde d'ammonium.

11. Dispersions suivant l'une quelconque des revendications précédentes, dans lesquelles les monomères acryliques et vinyliques sont sélectionnés parmi les esters d'acide acrylique, l'acrylonitrile, le méthacrylonitrile et les amides correspondants, éventuellement méthylolés et/ou éthérifiés avec des alcools monovalents en C₁₋₄; et les ethers et esters vinyliques.

12. Dispersions suivant l'une quelconque des revendications précédentes, ayant une teneur finale en solides secs supérieure à 20% en poids, de préférence de 30 à 50% en poids, la concentration de l'oligouréthane dans le polymère dispersé étant supérieure à 10% en poids, de préférence de 20 à 70% en poids.

13. Dispersions suivant l'une quelconque des revendications précédentes, dans lesquelles la concentration des centres ioniques dans les macromolécules est comprise dans une gamme de 10 à 50 méq/100 g de substance sèche et de préférence de 20 à 40 méq/100 g.

14. Utilisation des dispersions suivant l'une quelconque des revendications précédentes pour le revêtement, de préférence pour le revêtement de bois, de métal, de matières plastiques et de tissu.
